# EUROPEAN PATENT APPLICATION

(11) **EP 1 154 314 A2**
(43) Date of publication of application: **14.11.2001**
(21) Application number: 00308249.2
(22) Date of filing: 21.09.2000
(51) Int. Cl.: G03B 13/00, H04N 5/225, G01C 9/24

(54) **Camera viewfinder with camera inclination display**

(30) Priority: 09.05.2000 JP 2000135518
(71) Applicant: Miyaoka, Takashi, Tanashi-shi, Tokyo (JP)
(72) Inventor: Miyaoka, Takashi, Tanashi-shi, Tokyo (JP)
(74) Representative: Haley, Stephen

(57) **Abstract**

A camera 1 equipped with a viewfinder 3 comprises in the viewfinder 3 a level 30 for displaying an inclination with respect to a vertical direction of the camera.

Further, the camera 1 comprises camera inclination detecting means 10 for detecting an inclination with respect to a vertical direction of the camera; camera inclination displaying means 11 for displaying on the viewfinder an inclination with respect to a vertical direction of the camera detected by the camera inclination detecting means 10; and an operation switch 5 for switching ON or OFF the driving of the camera inclination displaying means 11.

## Description

The present invention relates to a camera equipped with a viewfinder or a monitor. More specifically, the present invention relates to a camera of simple construction and capable of filming in a horizontal state.

Cameras include analog cameras, digital cameras, video cameras and the like. In analog cameras, a range to be shot is filmed by viewing it through the viewfinder. In addition, in digital cameras or video cameras, a range to be shot is filmed by viewing it through the viewfinder or displaying it on the monitor.

In the case where a subject is attempted to be filmed in a horizontal state, the subject is filmed in a horizontal state through the viewfinder or on the monitor depending on the sense of the photographer. Thus, sometimes the subject is found not to be in a horizontal state only after outputting to the printer.

According to the present invention, a camera equipped with a viewfinder comprises the viewfinder provided with a level for displaying an inclination with respect to a vertical direction of the camera. The level provided in the viewfinder enables the photographer to find an inclination with respect to a vertical direction of the camera by its simple construction, and to easily perform filming by holding the camera in a horizontal state.

In addition, according to the present invention, a camera equipped with a viewfinder comprises camera inclination detecting means for detecting an inclination with respect to a vertical direction of the camera; and camera inclination displaying means for displaying on the viewfinder an inclination with respect to a vertical direction of the camera detected by the camera inclination detecting means. The inclination with respect to a vertical direction of the camera detected by the camera inclination detecting means is displayed on the viewfinder. Thus, this enables the photographer to find the inclination with respect to a vertical direction of the camera by its simple construction, and to easily perform filming by holding the camera in a horizontal state.

Further, according to the present invention, a camera equipped with a monitor comprises camera inclination detecting means for detecting an inclination with respect to a vertical direction of the camera; and camera inclination displaying means for displaying on the monitor an inclination with respect to a vertical direction of the camera detected by the camera inclination detecting means. The inclination with respect to a vertical direction of the camera detected by the camera inclination detecting means is displayed on the monitor. Thus, this enables the photographer to find the inclination with respect to a vertical direction of the camera by its simple construction, and to easily perform filming by holding the camera in a horizontal state.

Furthermore, the present invention comprises an operation switch for switching ON or OFF the driving of the camera inclination displaying means. The operation switch switches ON or OFF the driving of the camera inclination displaying means. Thus, if the camera inclination display constitutes an obstruction at filming, it cannot be used.

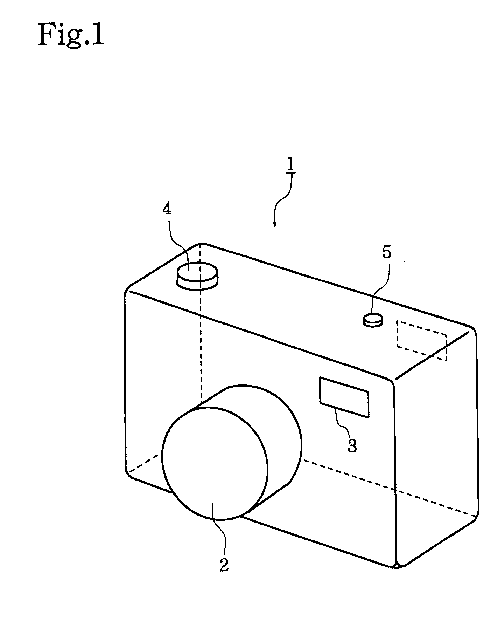

In the Drawings
Fig. 1 is a perspective view of a camera;
Fig. 2 is block diagram of a camera inclination display unit provided in the camera;
Fig. 3 is a diagram showing the camera inclination display on a viewfinder by holding the camera in a horizontal state;
Fig. 4 is a diagram showing the camera inclination display on a viewfinder by holding the camera in a vertical state;
Fig. 5 is a block diagram of another embodiment of a camera inclination display unit provided in the camera;
Fig. 6 is a perspective view of a further embodiment of the camera; and
Fig. 7 is a perspective view of a still another embodiment of the camera.

An embodiment of the camera according to the present invention will be described in detail hereinbelow with reference to the drawings. The present invention is not limited to this embodiment.

A camera 1 of this embodiment is an analog camera for taking a picture of a subject by making an exposure to a film, and comprises a photographing lens 2, a viewfinder 3 and a release button 4. Further, the camera 1 comprises an operation switch 5 for switching ON or OFF the driving of a camera inclination display.

The camera inclination display unit of this embodiment has camera inclination detecting means 10 for detecting an inclination with respect to a vertical direction of the camera, and camera inclination displaying means 11 for displaying on the viewfinder an inclination with respect to a vertical direction of the camera detected by the camera inclination detecting means 10, and the camera inclination displaying means 11 conducts a camera inclination display 12 on the viewfinder. The operation switch 5 switches ON or OFF the driving of the camera inclination displaying means 11.

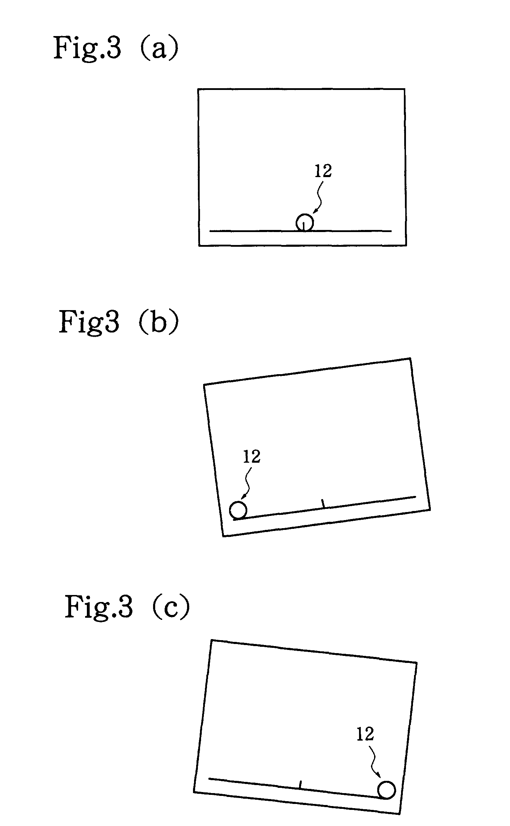

Fig. 3 shows the camera inclination display on the viewfinder by holding the camera in a horizontal state, in which Fig. 3 (a) shows the camera inclination display 12 on the viewfinder in a horizontal state, Fig. 3 (b) shows the camera inclination display 12 on the viewfinder in a left downward direction, and Fig. 3 (c) shows the camera inclination display 12 on the viewfinder in a right downward direction.

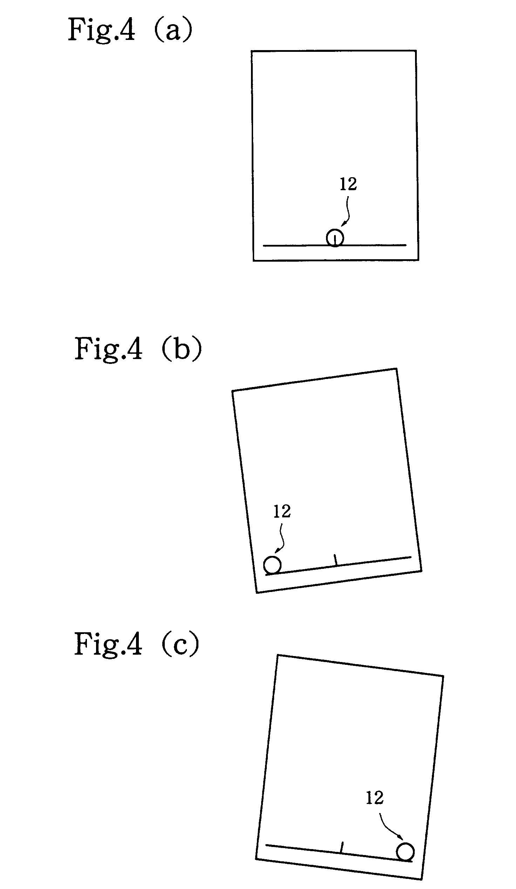

Fig. 4 shows the camera inclination display on the viewfinder by holding the camera in a vertical state, in which Fig. 4 (a) shows the camera inclination display 12 on the viewfinder in a horizontal state, Fig. 4 (b) shows the camera inclination display 12 on the viewfinder in a left downward direction, and Fig. 4 (c) shows the camera inclination display 12 on the viewfinder in a right downward direction.

When the camera inclination detecting means 10 detects the camera in a horizontal state and in a vertical state, this drives the camera inclination displaying means 11, thus switching the displayed position of the camera inclination display 12 displayed on the viewfinder in Figs. 3 and 4.

The inclination with respect to a vertical direction of the camera detected by the camera inclination detecting means 10 is displayed on the viewfinder by the camera inclination displaying means 11. Thus, this enables the photographer to find the inclination with respect to a vertical direction of the camera by its simple construction, and to easily perform filming by holding the camera in a horizontal state.

Further, the operation switch 5 switches ON or OFF the driving of the camera inclination displaying means 11. Thus, if the camera inclination display constitutes an obstruction at filming, it cannot be used.

In this embodiment, the camera inclination display 12 on the viewfinder is indicated by a circle, but is not limited to this, and may be displayed by other mark, numeral or symbol.

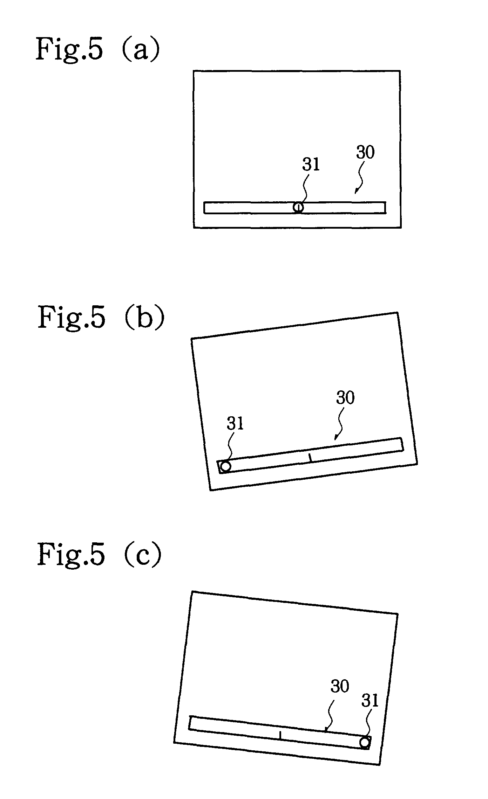

Fig. 5 shows another embodiment of a camera inclination display unit provided in a camera. The camera inclination display unit of this embodiment comprises a level 30 for displaying on the viewfinder an inclination with respect to a vertical direction of the camera. The inclination with respect to a vertical direction of the camera is displayed depending on the position of a camera inclination display 31 of the level 30.

Fig. 5 (a) shows the camera inclination display 31 of the level 30 on the viewfinder in a horizontal state, Fig. 5 (b) shows the camera inclination display 31 in a left downward direction, and Fig. 5 (c) shows the camera inclination display 31 in a right downward direction.

Thus, the level 30 provided in the viewfinder enables the photographer to find the inclination with respect to a vertical direction of the camera by its simple construction, and to easily perform filming by holding the camera in a horizontal state.

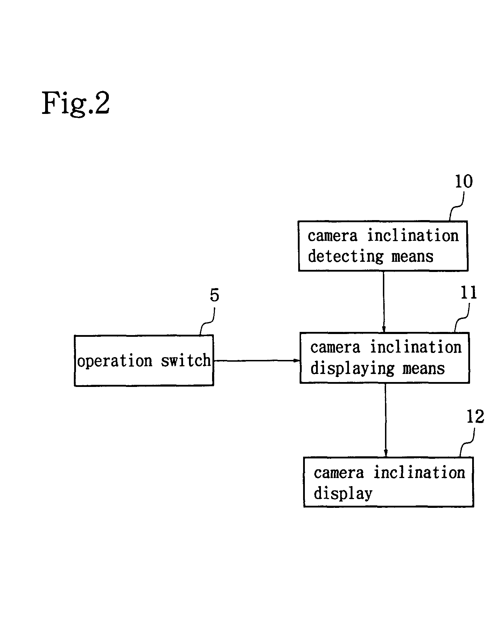

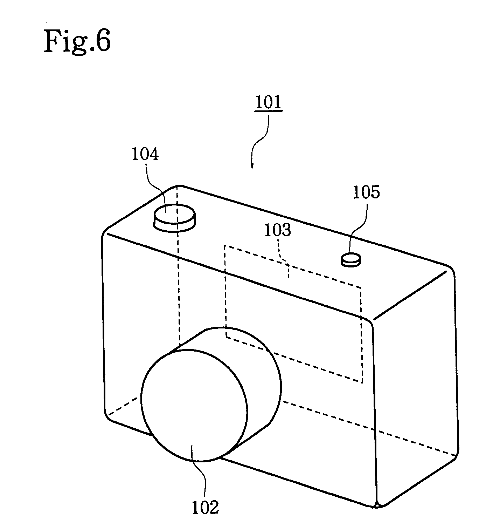

Fig. 6 is a perspective view of a further embodiment of a camera. A camera 101 of this embodiment is a digital camera for filming a subject to be recorded to a memory card. The camera 101 comprises a photographing lens 102, a release button 104 and a monitor 103. Further, the camera 101 comprises an operation switch 105 for switching ON or OFF the driving of the camera inclination display. The camera 101 is provided with a camera inclination display unit shown in Fig. 2, which displays the inclination with respect to a vertical direction of the camera on the monitor 103.

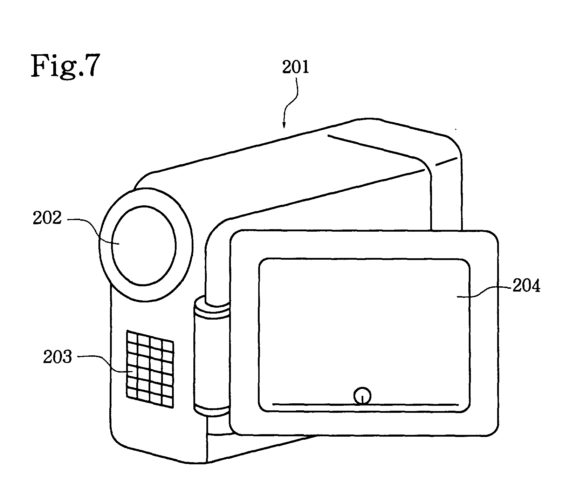

Fig. 7 is a perspective view of a still another embodiment of a camera. A camera 201 of this embodiment is a video camera for filming a subject to be recorded on a magnetic tape. The camera 201 comprises a photographing lens 202, a microphone 203 and a monitor 204. Further, the camera 201 comprises an operation switch (not shown) for switching ON or OFF the driving of the camera inclination display. The camera 201 is provided with a camera inclination display unit shown in Fig. 2, which displays the inclination with respect to a vertical direction of the camera on the monitor 204.

As described above, the present invention has the following effects.

According to the present invention, the level provided in the viewfinder enables the photographer to find the inclination with respect to a vertical direction of the camera by its simple construction, and to easily perform filming by holding the camera in a horizontal state.

In addition, according to the present invention, the inclination with respect to a vertical direction of the camera detected by the camera inclination detecting means is displayed on the viewfinder. Thus, this enables the photographer to find the inclination with respect to a vertical direction of the camera by its simple construction, and to easily perform filming by holding the camera in a horizontal state.

Further, according to the present invention, the inclination with respect to a vertical direction of the camera detected by the camera inclination detecting means is displayed on the monitor. Thus, this enables the photographer to find the inclination with respect to a vertical direction of the camera by its simple construction, and to easily perform filming by holding the camera in a horizontal state.

Furthermore, according to the present invention, the operation switch switches ON or OFF the driving of the camera inclination displaying means. Thus, if the camera inclination display constitutes an obstruction at filming, it cannot be used.

## Claims

1. A camera equipped with a viewfinder comprising: the viewfinder provided with a level for displaying an inclination with respect to a vertical direction of the camera.

2. A camera equipped with a viewfinder comprising: camera inclination detecting means for detecting an inclination with respect to a vertical direction of the camera; and camera inclination displaying means for displaying on said viewfinder an inclination with respect to a vertical direction of the camera detected by the camera inclination detecting means.

3. A camera equipped with a monitor comprising: camera inclination detecting means for detecting an inclination with respect to a vertical direction of the camera; and camera inclination displaying means for displaying on said monitor an inclination with respect to a vertical direction of the camera detected by the camera inclination detecting means.

4. The camera according to claim 2 or 3, comprising an operation switch for switching ON or OFF the driving of said camera inclination displaying means.
